# EUROPÄISCHE PATENTANMELDUNG

(11) **EP 3 695 997 A1**
(43) Veröffentlichungstag der Anmeldung: **19.08.2020**
(21) Anmeldenummer: 19157533.1
(22) Anmeldetag: 15.02.2019
(51) Int. Cl.: B60H 1/00, B60P 3/20, B62D 33/04

(54) **KOFFERAUFBAU MIT EINEM LUFTKANAL ZUM LEITEN VON KÜHLLUFT**

(71) Anmelder: Schmitz Cargobull AG, 48341 Altenberge (DE)
(72) Erfinder: Kuhn, Marco, 48691 Vreden (DE); Bulla, Stefan, 46325 Borken (DE)
(74) Vertreter: Cohausz & Florack

(57) **Zusammenfassung**

Die Erfindung betrifft einen Kofferaufbau (1,43) eines Nutzfahrzeugs (N), insbesondere eines Lastkraftwagens, Anhängers oder Sattelaufliegers, mit einer Transportkältemaschine (10) zum Erzeugen von Kühlluft, mit einem Dach (2,42) und mit wenigstens einem am Dach (2,42) gehaltenen Luftkanal (13,40) zum Leiten der Kühlluft wenigstens teilweise entlang der Längserstreckung des Kofferaufbaus (1,43), wobei der wenigstens eine Luftkanal (13,40) wenigstens ein Hüllelement (16) zum wenigstens überwiegenden Begrenzen des Luftkanals (13,40) in vom Dach (2,42) abgewandten Richtungen, wenigstens zwei in Längsrichtung voneinander beabstandete Montageelemente (19,20,21) zum wenigstens teilweisen Montieren des wenigstens einen Luftkanals (13,40) am Dach (2,42) und wenigstens ein Abspannelement (15,41) zum Halten des Hüllelements (16) an den wenigstens zwei Montageelementen (19,20,21) umfasst. Damit die aus dem Stand der Technik bekannten Nachteile dieser Kofferaufbauten verringert werden können, ohne dadurch andere Nachteile in unverhältnismäßigem Umfang in Kauf nehmen zu müssen, wird vorgeschlagen, dass das wenigstens eine Abspannelement (15,41) in Längsrichtung des Abspannelements (15,41) zwischen den wenigstens zwei Montageelementen (19,20,21) abgespannt gehalten ist und dass das wenigstens eine Hüllelement (16) zwischen den wenigstens zwei Montageelementen (19,20,21) von dem wenigstens einen Abspannelement (15,41) entgegen der Schwerkraft gehalten ist.

## Beschreibung

Die Erfindung betrifft einen Kofferaufbau eines Nutzfahrzeugs, insbesondere eines Lastkraftwagens, Anhängers oder Sattelaufliegers, mit einer Transportkältemaschine zum Erzeugen von Kühlluft, mit einem Dach und mit wenigstens einem am Dach gehaltenen Luftkanal zum Leiten der Kühlluft wenigstens teilweise entlang der Längserstreckung des Kofferaufbaus, wobei der wenigstens eine Luftkanal wenigstens ein Hüllelement zum wenigstens überwiegenden Begrenzen des Luftkanals in vom Dach abgewandten Richtungen, wenigstens zwei in Längsrichtung voneinander beabstandete Montageelemente zum wenigstens teilweisen Montieren des wenigstens einen Luftkanals am Dach und wenigstens ein Abspannelement zum Halten des Hüllelements am den wenigstens zwei Montageelementen umfasst.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Daches des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Auch die Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport, geeignet.

Bei Kühltransporten ist in der Regel sicherzustellen, dass die Temperatur der temperaturempfindlichen Güter einen von den jeweiligen Gütern abhängigen Temperaturgrenzwert nicht übersteigt, um Qualitätseinbußen der Güter zu verhindern. So kann es etwa beim Transport von tiefgekühlten Lebensmitteln erforderlich sein, dass die Temperatur im Laderaum unterhalb eines Werts von beispielsweise -20 °C gehalten wird. Deshalb weisen viele der für den Kühltransport eingesetzten Kofferaufbauten eine sogenannte Transportkältemaschine auf, mit der eine aktive Kühlung des Laderaums und somit der in dem Laderaum aufgenommenen Güter bzw. Ladung erfolgen kann. Dabei ist die Transportkältemaschine meist an der Stirnwand des Kofferaufbaus montiert und wenigstens teilweise außerhalb des Laderaums angeordnet.

Unabhängig von der Anordnung der Transportkältemaschine erfolgt die Kühlung des Laderaums durch die Transportkältemaschine in der Regel, indem Luft aus dem Laderaum angesaugt und in der Transportkältemaschine durch Entzug von Wärme und Abgabe der Wärme an die Umgebung außerhalb des Kofferaufbaus abgekühlt wird. Die abgekühlte Luft wird als Kühlluft zurück in den Laderaum geblasen. Dabei weist die Transportkältemaschine zum Zurückblasen der Kühlluft aus der Transportkältemaschine in den Laderaum typischerweise wenigstens eine Kühlluftöffnung auf, über die die Kühlluft aus der Transportkältemaschine ausströmt. Je nach dem Typ der Transportkältemaschine kann diese auch mehrere voneinander beabstandete Kühlluftöffnungen aufweisen. Dabei ist die wenigstens eine Kühlluftöffnung entsprechend der Montageposition der Transportkältemaschine häufig im Bereich der Stirnwand des Kofferaufbaus und vom Dach des Kofferaufbaus beabstandet angeordnet.

Um die aus der wenigstens einen Kühlluftöffnung ausströmende Kühlluft von der Kühlluftöffnung wegzuleiten, ist bei Kofferaufbauten, die für den Kühltransport vorgesehen sind, neben der Transportkältemaschine häufig wenigstens eine in dem Laderaum angeordnete Luftleiteinrichtung vorgesehen. Diese Luftleiteinrichtung, auch Lufthutze genannt, dient in der Regel dazu, die aus der wenigstens einen Kühlluftöffnung ausströmende Kühlluft in einen oder mehrere, insbesondere sich entlang des Dachs des Kofferaufbaus erstreckende, Luftkanäle zu leiten, über die die Kühlluft in von der Kühlluftöffnung weiter entfernte Bereiche des Laderaums transportiert wird und so im gesamten Laderaum verteilt wird. Auf diese Weise können auch die Bereiche des Laderaums, die nicht in unmittelbarer Nähe zu der wenigstens einen Kühlluftöffnung angeordnet sind, effektiv gekühlt werden und kann eine annähernd homogene Temperaturverteilung im Laderaum erreicht werden.

Der wenigstens eine Luftkanal des Kofferaufbaus weist typischerweise ein Hüllelement auf, das den Luftkanal wenigstens überwiegend in vom Dach abgewandten Richtungen vom übrigen Laderaum abgrenzt. Dieses Hüllelement kann aus einem steifen Kunststoff oder einer flexiblen Plane gebildet sein. Um den Luftkanal am Dach zu montieren, sind häufig wenigstens zwei in Längsrichtung voneinander beabstandete Montageelemente vorgesehen, die in einer gemeinsamen Montageeinrichtung, etwa in Form einer Montageschiene, zusammengefasst sein können. Zudem sind Luftkanäle bekannt, die über Abspannelemente an den wenigstens zwei Montageelementen und damit letztlich am Dach gehalten werden. Bei den bekannten Luftkanälen treten verschiedene Nachteile auf, die abhängig von der jeweiligen Ausgestaltung der Luftkanäle zu unterschiedlichen Problemen führen können. In diesem Zusammenhang sind beispielsweise die Kosten der Luftkanäle, der Aufwand für die Montage der Luftkanäle, die Effektivität der Luftkanäle, die Flexibilität der Luftkanäle und das Handling der Luftkanäle zu nennen.

Daher liegt der vorliegenden Erfindung die Aufgabe zugrunde, den Kofferaufbau der eingangs genannten und zuvor näher beschriebenen Art derart auszugestalten und weiterzubilden, dass die aus dem Stand der Technik bekannten Nachteile verringert werden können, ohne dadurch andere Nachteile in unverhältnismäßigem Umfang in Kauf nehmen zu müssen.

Diese Aufgabe ist bei einem Kofferaufbau nach dem Oberbegriff von Anspruch 1 dadurch gelöst, dass das wenigstens eine Abspannelement in Längsrichtung des Abspannelements zwischen den wenigstens zwei Montageelementen abgespannt gehalten ist und dass das wenigstens eine Hüllelement zwischen den wenigstens zwei Montageelementen von dem wenigstens einen Abspannelement entgegen der Schwerkraft gehalten ist.

Durch die Verwendung des Abspannelements, das in Längsrichtung des Abspannelements und damit insbesondere wenigstens im Wesentlichen in der Längsrichtung des Luftkanals abgespannt ist, kann der Luftkanal über sehr wenige Montagestellen am Dach montiert werden. Das Hüllelement wird dann bedarfsweise zwischen den wenigstens zwei Montageelementen einzig von dem abgespannten Abspannelement gegenüber der Schwerkraft unter dem Dach gehalten. Dabei ist es grundsätzlich möglich, dass die wenigstens zwei Montageelemente als unterschiedliche Abschnitte einer gemeinsamen Montageeinrichtung ausgebildet sind. Da sich der wenigstens eine Luftkanal aber regelmäßig über eine nicht unerhebliche Länge in Längsrichtung des Kofferaufbaus erstrecken wird, kommen dann meist auch nur verhältnismäßig lange Montageeinrichtungen in Frage, die wegen ihres höheren Aufwands regelmäßig weniger bevorzugt sein dürften.

Zudem erlaubt das Halten des Hüllelements über das wenigstens eine Abspannelement und die wenigstens zwei Montageelemente die Verwendung eines Hüllelements aus einem sehr leichten und flexiblen Material, was nicht nur die Montage vereinfacht, sondern auch zu einer Kosteneinsparung führen kann. Dünne und flexible Materialien für das Hüllelement sind auch deshalb von Vorteil, weil so im Laderaum sogenannte Quertrennwände aufgerichtet werden können. Diese Quertrennwände dienen dem Unterteilen des Laderaums des Kofferaufbaus in der Längsrichtung in mehrere Teilladeräume. In diesen können unterschiedliche Temperaturen bereitgestellt werden, etwa für den Fall, dass temperaturempfindliche Güter und nicht temperaturempfindliche Güter gemeinsam transportiert werden sollen. Dann muss beispielsweise nur einer der Teilladeräume gekühlt werden oder es müssen unterschiedliche Teilladeräume gekühlt werden. In diesen Fällen kühlt die Transportkältemaschine bevorzugt nur den vorderen Teilladeraum. Ein hinterer Laderaum bleibt dann ungekühlt oder wird separat durch eine separate Kühleinrichtung, insbesondere durch einen sogenannten Deckenverdampfer, gekühlt.

Aus diesem Grunde ist es meist wünschenswert, wenn die Quertrennwände die angrenzenden Teilladeräume möglichst luftdicht gegeneinander abschließen. Dies ist aber nur dann möglich, wenn etwaige Luftkanäle am Dach eine luftdichte Anlage der Quertrennwand am Dach nicht behindern. Da vorliegend die Luftkanäle wenigstens abschnittsweise nur aus wenigstens einem Abspannelement und einem Hüllelement gebildet werden können, erfordert das Errichten einer Quertrennwand in diesem Bereich keine Demontage des Luftkanals. Dies ist noch umso mehr der Fall, wenn das wenigstens eine Abspannelement sehr dünn ausgeführt werden kann.

Nicht zuletzt kann die Montage des Hüllelements über das Abspannelement auch eine leichte Demontage des Hüllelements erlauben, was die Reinigung des Luftkanals erheblich erleichtern kann. Eine leichte Reinigung ist insbesondere für den Transport von Lebensmitteln von besonderer Bedeutung. Außerdem ist es günstig, wenn die Reinigung des Luftkanals einfach, problemlos und überall vom Fahrer selbst durchgeführt werden kann.

Unter einem Abspannen des Abspannelements wird vorliegend verstanden, dass das Abspannelement zwischen den wenigstens zwei Montageelementen gedehnt, also wenigstens geringfügig gelängt wird. So übt das wenigstens eine Abspannelement infolge der Dehnung eine Rückstellkraft auf die wenigstens zwei Montageelemente aus, die verhindern, dass sich das Abspannelement wieder vollständig zusammenzieht. Da regelmäßig nicht gewünscht sein wird, dass das Abspannelement zwischen den wenigstens zwei Abspannelementen nach unten durchhängt, wird es bevorzugt sein, ein Abspannelement zu verwenden, das sich auch unter sehr großen Zugkräften nur sehr wenig in seiner Länge dehnt.

Den Montageelementen kommt mithin eine doppelte Funktion zu, nämlich das Abspannen des Abspannelements und das Halten des Abspannelements zusammen mit dem Hüllelement. In diesem Zusammenhang ist es nicht unbedingt von Bedeutung, ob die Montageelemente als separate Bauteile ausgebildet werden. Die Montageelemente können auch Teil einer gemeinsamen Montageeinrichtung, etwa in Form einer Montageschiene, sein. Außerdem ist es auch denkbar, dass wenigstens ein Montageelement aus mehreren separaten Bauteilen besteht, die direkt miteinander verbunden sein können, aber nicht müssen. Es kann beispielsweise auch vorgesehen sein, dass die einzelnen Bauteile wenigstens eines Montageelements separat und bedarfsweise voneinander beabstandet am Dach festgelegt sind. Wenigstens ein Montageelement kann auch in ein weiteres Bauelement integriert sein, und zwar insbesondere in ein sich an den Luftkanal anschließendes Bauelement. So kann dem Luftkanal beispielsweise eine Luftleiteinrichtung zum Leiten von Luft in den Luftkanal vorgeschaltet sein, wobei dann bedarfsweise das Montageelement in die Luftleiteinrichtung integriert ist. Das Montageelement muss also nicht zwingend als separates Bauelement vorgesehen werden. Das Montageelement kann auch in ein anderes Bauelement integriert sein oder es bildet bedarfsweise das gesamte andere Bauelement das wenigstens eine Montageelement. Welcher dieser beiden genannten Fälle vorliegt, wird dabei insbesondere durch die Art und Weise bestimmt, in der das weitere Bauelement im Kofferaufbau montiert ist.

Das vom wenigstens einen Abspannelement gehaltene Hüllelement dient der Begrenzung des Luftkanals, so dass die Kühlluft entlang des Luftkanals in einen hinteren Bereich des Kofferaufbaus geleitet werden kann. Das Hüllelement kann den Luftkanal aber nur teilweise begrenzen, und zwar nach unten, also wenigstens überwiegend in den vom Dach abgewandten Richtungen. Hier ist es demnach nicht erforderlich, auf bestimmte Richtungen einzugehen bzw. bestimmte Richtungen exakt zu definieren. Dies gilt auch vor dem Hintergrund, dass bereichsweise Öffnungen in dem Hüllelement zum Austreten von Kühlluft vorgesehen sein können. Grundsätzlich ist der Luftkanal jedoch durch das Hüllelement vom Dach in eine zum Ladeboden des Laderaums oder wenigstens nach unten gerichtete Blickrichtung gesehen begrenzt.

Bei einer ersten besonders bevorzugten Ausgestaltung des Kofferaufbaus ist zugeordnet zu einander gegenüberliegenden Längsseite des Luftkanals jeweils wenigstens ein Abspannelement vorgesehen, das in Längsrichtung des jeweiligen Abspannelements zwischen jeweils wenigstens zwei Montageelementen abgespannt gehalten ist. So kann der Luftkanal an beiden Längsseiten einfach und vorteilhaft gehalten werden. Die zuvor beschriebenen Vorteile kommen mithin besonders zum Tragen. In diesem Zusammenhang bietet es sich demnach weiter an, wenn das wenigstens eine Hüllelement an einander gegenüberliegenden Längsseiten des Luftkanals von diesen Längsseiten zugeordneten Abspannelementen gegenüber der auf das Hüllelement einwirkenden Schwerkraft gehalten ist. Die entsprechenden Abspannelemente sind dann an den jeweiligen Längsseiten des Luftkanals jeweils zwischen wenigstens zwei Montageelementen entgegen der Schwerkraft gehalten. Hierdurch werden eine einfache Montage, ein leichtes Handling und eine flexible Nutzung erreicht.

Um eine möglichst zweckmäßige Verteilung der Kühlluft zu erreichen, kann es sich anbieten, wenn sich das wenigstens eine Abspannelement zwischen den wenigstens zwei Montageelementen wenigstens im Wesentlichen durchgängig vom Dach beabstandet erstreckt. Auf diese Weise wird die Montage des Luftkanals in diesem Bereich unabhängig vom Dach. Es sind also wenigstens abschnittsweise keine zusätzlichen Montagevorrichtungen am Dach vorgesehen, welche das Errichten einer Quertrennwand behindern könnten. Wenn durch das Errichten einer Quertrennwand der Luftkanal im Bereich der Quertrennwand flach gegen das Dach gedrückt wird, kann die Kühlluft dennoch vor der Quertrennwand bedarfsweise seitlich zwischen dem Luftkanal und dem Dach ausströmen. Dabei kann es für eine abschnittsweise vom Dach unabhängige Montage des Luftkanals grundsätzlich zweckmäßig sein, wenn der Abstand des wenigstens einen Abspannelements zwischen den wenigstens zwei Montageelementen vom Dach wenigstens im Wesentlichen durchgängig wenigstens 0,5 cm, vorzugsweise wenigstens 1 cm, insbesondere wenigstens 2 cm, beträgt und/oder wenigstens im Wesentlichen durchgängig höchstens 2,5 cm, vorzugsweise höchstens 3 cm, insbesondere höchstens 4 cm, beträgt. Diese Abstände verstehen sich dabei insbesondere in einer vertikalen Richtung. Der Luftkanal ist somit frei vom Dach und unabhänig vom Dach und/oder sehr nahe am Dach vorgesehen. Dies lässt eine sehr hohe Ladehöhe zu und erlaubt dennoch eine zweckmäßige Verteilung der Kühlluft im Laderaum.

Für eine zuverlässige Montage eines in Längsrichtung des Luftkanals abschnittsweise nur geringfügig durchhängenden Luftkanals bietet es sich besonders an, wenn das wenigstens eine Abspannelement ein Seil, insbesondere ein Stahlseil, ein Band und/oder Gurt ist. Dieses Abspannelement kann zudem sehr dünn in vertikaler Richtung des Kofferaufbaus ausgeführt werden. Dies erleichtert das Errichten einer Quertrennwand ohne vorherige, wenigstens partielle, Demontage des Luftkanals. Um die Dehnung des Abspannelements beim Abspannen des Abspannelements zwischen den wenigstens zwei Montageelementen zu verringern und die Stabilität des Abspannelements zu erhöhen, ist es zudem zweckmäßig, wenn das Band und/oder der Gurt beispielsweise Drähte oder Drahtseile aufweist. Alternativ oder zusätzlich kann das Band und/oder der Gurt zu diesem Zweck auch geflochten und/oder gewebt sein.

Damit das Abspannelement einfach und zweckmäßig gespannt und/oder entspannt werden kann, bietet es sich an, wenn eine Spanneinrichtung zum Spannen und/oder Entspannen des wenigstens einen Abspannelements zwischen den wenigstens zwei Montageelementen vorgesehen ist. Die Möglichkeit, das Abspannelement spannen und/oder entspannen zu können, erlaubt eine Montage und/oder Demontage direkt im Kofferaufbau, was die Handhabung des Luftkanals vereinfacht. Insbesondere kann der Luftkanal bedarfsweise vom Fahrer selbst wenigstens teilweise demontiert und anschließend wieder montiert werden, um den Luftkanal von Zeit zu Zeit zu reinigen. Dabei ist es besonders zweckmäßig, wenn die Spanneinrichtung einem Montageelement zugeordnet ist, da das Abspannelement zwischen wenigstens zwei Montageelementen abgespannt wird. Besonders zweckmäßig kann es dabei sein, wenn die Spanneinrichtung in das Montageelement integriert ist oder umgekehrt. Es ist grundsätzlich aber auch möglich, die Spanneinrichtung und das Montageelement als separate Bauteile auszubilden und diese dann bedarfsweise separat voneinander sowie bedarfsweise beabstandet voneinander am Dach festzulegen.

Das Spannen und Entspannen des Abspannelements lässt sich einfach auch von ungeschulten Fahrern bewerkstelligen, wenn die wenigstens eine Spanneinrichtung eine, insbesondere ortsfeste, Spannschraube aufweist. Mit dieser kann dann direkt oder indirekt ein Spannschlitten kämmen, der bevorzugt in der Längsrichtung des Abspannelements verschiebbar an der Spanneinrichtung gehalten und mit dem wenigstens einen Abspannelement verbunden sein wird. So kann über das Drehen einer Spannschraube der Spannschlitten in der Längsrichtung des Abspannelements hin und her verstellt werden, um das Abspannelement zu spannen und/oder zu entspannen. Die entsprechende Ausgestaltung der Spanneinrichtung erlaubt zudem, die Längsachse der Spannschraube und die Längserstreckung des Abspannelements wenigstens im Wesentlichen parallel aber voneinander senkrecht zur Längserstreckung des Abspannelements zu beabstanden. Auf diese Weise kann die Zugänglichkeit der Spannschraube verbessert und das Handling der Spannschraube vereinfacht werden.

Um den Luftkanal und dessen Handhabung weiter zu vereinfachen, kann das Hüllelement wenigstens im Wesentlichen aus einem Tuch und/oder einer Plane gebildet sein. Dies kann sich zudem günstig auf die Herstellungskosten des Luftkanals auswirken. Alternativ oder zusätzlich bietet es sich aus denselben Gründen an, wenn das Hüllelement wenigstens im Wesentlichen aus einem Gewebe und/oder aus Kunststoff gebildet ist.

Damit das Hüllelement durch ein wiederholtes Spannen und Entspannen nicht nennenswert in Mitleidenschaft gezogen wird, wodurch sich die Langlebigkeit des Hüllelements steigern lässt, kann das wenigstens eine Abspannelement wenigstens abschnittsweise in einer Tasche aufgenommen sein. Die Tasche erstreckt sich zu diesem Zweck vorzugsweise wenigstens im Wesentlichen längs zum Luftkanal. Alternativ oder zusätzlich ist es zweckmäßig, wenn die wenigstens eine Tasche an gegenüberliegenden Längsenden offen ist, um an den Längsenden das Abspannelement in die Tasche eintreten bzw. austreten lassen zu können. So wird das Spannen und Entspannen des Abspannelements wenigstens im Wesentlichen von dem Hüllelement entkoppelt. In der Umfangsrichtung kann die Tasche jedoch wenigstens abschnittsweise vollständig geschlossen sein und das Abspannelement in diesem Abschnitt vollständig aufnehmen.

Der Luftkanal kann in Richtung des Dachs wenigstens abschnittsweise offen sein, was die Ausgestaltung und die Reinigung des Luftkanals vereinfachen kann. Alternativ oder zusätzlich kann der Luftkanal zusammen mit dem Dach wenigstens einen sich wenigstens abschnittsweise in Längsrichtung des Luftkanals erstreckenden Spalt zum seitlichen Ausströmen von Kühlluft bilden. Der Luftkanal weist dann an wenigstens einer Längsseite eine Öffnung auf, die zusammen mit dem Dach einen Spalt bildet, durch den Kühlluft seitlich aus dem Luftkanal austreten kann, um so eine möglichst gleichmäßige Temperaturverteilung im Laderaum zu erreichen. Dabei lassen sich die seitlich austretende Kühlluftmenge und die Geschwindigkeit der seitlich austretenden Kühlluft durch die Breite, also vorliegend die Höhe des Spalts zwischen dem Dach und dem Rand des Luftkanals, beeinflussen. Es hat sich dabei gezeigt, dass bei den zuvor beschriebenen, bevorzugten Abständen des wenigstens einen Abspannelements vom Dach eine zweckmäßige Kühlung des Laderaums über dessen gesamte Längserstreckung erreicht werden kann. Eine gleichmäßige Temperaturverteilung lässt sich grundsätzlich einfach erreichen, wenn der Luftkanal nach oben durch das Dach geschlossen wird. Nach unten kann der Luftkanal dann durch das Hüllelement geschlossen sein.

Alternativ oder zusätzlich kann der Luftkanal in Richtung des Dachs aber wenigstens abschnittsweise wenigstens im Wesentlichen geschlossen ausgebildet sein, und zwar bedarfsweise durch ein umlaufend vorgesehenes Hüllelement. Dann kann die Leitung der Kühlluft wenigstens im Wesentlichen unabhängig von dem Dach erfolgen, wodurch ein unerwünschtes Erwärmen der Kühlluft über das Dach vermieden werden kann. Es kann so auch sichergestellt werden, dass der Strömungsquerschnitt des Luftkanals für die Kühlluft nicht nennenswert davon abhängt, ob der Luftkanal in dem vorbestimmten Abstand von dem Dach montiert ist oder nicht. Alternativ oder zusätzlich kann der Luftkanal entlang der Längserstreckung des Luftkanals seitliche Öffnungen aufweisen, um über diese Öffnungen Kühlluft seitlich ausströmen zu lassen. Hierdurch kann eine gleichmäßige Temperaturverteilung im Laderaum sichergestellt werden.

Um den Druck der Kühlluft beim Durchströmen des Luftkanals zu erhöhen oder zu vermeiden, dass der Luftkanal beim Beladen des Kofferaufbaus mit einem Fahrzeug oder der Ladung angefahren wird, was zu erheblichen Beschädigungen des Luftkanals führen kann, kann der freie Strömungsquerschnitt des Luftkanals dem hinteren freien Ende des Luftkanals zugeordnet, sich verjüngend ausgebildet sein. Dabei verjüngt sich der Strömungsquerschnitt des Luftkanals vorzugsweise so, dass der Luftkanal in Richtung des hinteren Endes breiter und flacher wird. Aus strömungsdynamischer Sicht ist es grundsätzlich bevorzugt, wenn sich der Strömungsquerschnitt des Luftkanals senkrecht zur Längserstreckung und damit senkrecht zur Strömungsrichtung der Kühlluft verjüngt. Wenn das untere Ende des Luftkanals im Bereich des hinteren Endes des Luftkanals höher angeordnet ist als in einem vom hinteren Ende des Luftkanals beabstandeten vorderen oder mittleren Bereich, kann eine bevorzugte Strömung der Kühlluft erreicht werden und es kann vermieden werden, dass der Luftkanal beim Be- und Entladen durch Kontakt mit Fahrzeugen oder Ladung beschädigt wird.

Damit auf einfache Weise ein flacheres und/oder sich verjüngendes Ende des Luftkanals bereitgestellt werden kann, kann das Hüllelement im Bereich des hinteren Endes des Luftkanals in wenigstens einem seitlichen Randbereich um einen Abstandshalter herumgeführt sein, der eine entsprechende Formgebung des Luftkanals erzwingt. Durch das Herumführen des Hüllelements um den Abstandshalter wird die Breite des Luftkanals oberhalb des Abstandshalters schmaler als wenigstens abschnittsweise im Bereich des wenigstens einen Abstandshalters, und zwar jeweils am Ende des Luftkanals, wo der Abstandshalter angeordnet ist. Alternativ oder zusätzlich wird das untere Ende des Luftkanals im Bereich des Abstandshalters, mithin insbesondere im Bereich des entsprechenden hinteren Endes des Luftkanals, wenigstens abschnittweise höher angeordnet sein als in einem vom wenigstens einen Abstandshalter in Längsrichtung des Luftkanals beabstandeten Bereich. Alternativ zu dem wenigstens einen Abstandshalter könnte auch die Breite des Hüllelements am hinteren Ende reduziert werden. Um die Herstellungskosten für das Hüllelement zu reduzieren, bietet es sich jedoch grundsätzlich an, wenn dieses über seine gesamte Längserstreckung wenigstens im Wesentlichen konstante Abmessungen aufweist. Die Abmessungen müssen jedoch nicht unbedingt völlig konstant sein. So kann es zum seitlichen Ausblasen von Kühlluft oder zur Montage des Hüllelements zweckmäßig sein, wenn abschnittsweise Aussparungen an dem Hüllelement vorgenommen werden, die eine lokale Abweichung von den Abmessungen des Hüllelements darstellen.

Das hintere Ende des Luftkanals kann soweit verjüngt sein, dass am hinteren Ende des Luftkanals lediglich ein Spalt zwischen dem Hüllelement und dem Dach verbleibt, der in etwa so hoch ist wie der wenigstens eine Spalt an wenigstens einer Längsseite des Luftkanals zwischen dem Hüllelement und dem Dach. Das hintere Ende kann aber bedarfsweise auch vollkommen geschlossen sein, so dass die Kühlluft ausschließlich an wenigstens einer Längsseite des Luftkanals ausströmt. Insbesondere im Falle eines vollständig geschlossenen hinteren Endes des Luftkanals kann auch auf eine Verjüngung des hinteren Abschnitts des Luftkanals verzichtet werden. Das hintere Ende ist bei einem wenigstens teilweisen Verschließen bedarfsweise nicht hauptsächlich für das Ausblasen von Kühlluft verantwortlich.

Besonders einfach für die Montage des Luftkanals ist es, wenn der wenigstens eine Abstandshalter in das dem hinteren Ende des Luftkanals zugeordnete wenigstens eine Montageelement integriert ist. So müssen nicht mehrere separate Bauteile bedarfsweise separat voneinander am Dach montiert werden. Außerdem kann so die Montage des Hüllelements vereinfacht werden. Dies gilt insbesondere, wenn das wenigstens eine Montageelement im Bereich des Abstandshalters einen Halter für das Abspannelement aufweist. So wird das Hüllelement einfach und zuverlässig so montiert, dass der Abstandshalter seine Funktion erfüllen kann. Das Montageelement ist dabei vorzugsweise in einer gemeinsamen Ebene mit dem Abstandshalter senkrecht zur Längserstreckung des Luftkanals vorgesehen. Auf diese Weise lässt sich zuverlässig verhindern, dass sich das Hüllelement versehentlich von dem wenigstens einen Abstandshalter lösen kann.

Unabhängig davon kann das Abspannelement an wenigstens einem hinteren Montageelement wenigstens in der Längsrichtung des Abspannelements, in der Längsrichtung des Luftkanals, in der Schwerkraftrichtung und/oder zu wenigstens einer Längsseite des Luftkanals formschlüssig gehalten sein. Der Formschluss in der Längsrichtung des Luftkanals ermöglicht ein einfaches Abspannen des Abspannelements. Wenn der Formschluss zudem in der Schwerkraftrichtung und wenigstens im Wesentlichen senkrecht hierzu zur Seite vorgesehen ist, kann das Abspannelement zuverlässig in Position gehalten werden. Um das Abspannelement auch in einem mittleren Bereich zu halten und/oder zu stützen, kann das Abspannelement an wenigstens einem mittleren Montageelement in der Schwerkraftrichtung und/oder zu wenigstens einer Längsseite des Luftkanals formschlüssig gehalten sein. Wenn das Abspannelement in all diesen Richtungen von dem mittleren Montageelement gehalten ist, wird der Luftkanal zuverlässig in Position gehalten. Das Abspannelement kann alternativ oder zusätzlich an wenigstens einem vorderen Montageelement wenigstens in der Längsrichtung des Abspannelements, in der Längsrichtung des Luftkanals, in der Schwerkraftrichtung und/oder zu wenigstens einer Längsseite des Luftkanals formschlüssig gehalten sein. Hier ermöglicht der Formschluss in der Längsrichtung des Luftkanals analog zum hinteren Montageelement ein einfaches Abspannen des Abspannelements. Wenn der Formschluss zudem in der Schwerkraftrichtung und wenigstens im Wesentlichen senkrecht hierzu zur Seite vorgesehen ist, kann das Abspannelement in einem vorderen Bereich sehr zuverlässig in Position gehalten werden.

Kostengünstig und zweckmäßig hinsichtlich einer thermischen Isolierung wird es regelmäßig sein, wenn das wenigstens eine Montageelement aus Kunststoff gebildet ist. Das wenigstens eine Montageelement wird zudem bevorzugt am Dach verschraubt und/oder vernietet sein, weil dies die Montage des Luftkanals stark vereinfacht. Um eine Stützung und Positionierung des Abspannelements in einem mittleren Abschnitt des Luftkanals in zweckmäßiger Weise zu erreichen, kann ein mittleres Montageelement in der Längsrichtung des Abspannelements voneinander beabstandete und zu entgegengesetzten Längsseiten des Kanals hin geöffnete Hakenelemente aufweisen. Das Abspannelement kann dann in jedes der Hakenelemente von einer anderen Seite eingeführt und dennoch in jeder dieser entsprechenden Richtungen formschlüssig gehalten werden.

Wenn der Luftkanal mit seinem vorderen Ende mit einer Luftleiteinrichtung zum Leiten von Kühlluft von der Transportkältemaschine zum wenigstens einen Luftkanal verbunden ist, kann eine bevorzugte Strömung der Kühlluft in Längsrichtung des Kofferaufbaus bereitgestellt werden. Unnötige Druckverluste können auf diese Weise beispielsweise vermieden werden. Um weitere Synergien zu nutzen, bietet es sich grundsätzlich an, wenn das vordere Montageelement das vordere Ende des Luftkanals und zusätzlich noch das hintere Endes der Luftleiteinrichtung am Dach des Kofferaufbaus hält. Zusätzliche Montageelemente für die Montage des hinteren Endes der Luftleiteinrichtung sind so bedarfsweise entbehrlich. Das vordere Ende des Luftkanals und das hintere Ende der Luftleiteinrichtung können mithin über das gemeinsame Montageelement am Dach des Kofferaufbaus montiert sein.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem ersten erfindungsgemäßen Kofferaufbau in einer perspektivischen Ansicht,
- Fig. 2A-B: ein Detail des Kofferaufbaus aus Fig. 1 im Bereich des Dachs und eines Luftkanals in einer Schnittansicht entlang einer vertikalen und sich parallel zur Längserstreckung des Kofferaufbaus erstreckenden Schnittebene und entlang einer vertikalen und sich senkrecht zur Längserstreckung des Kofferaufbaus erstreckenden Schnittebene,
- Fig. 3A-C: den Kofferaufbau aus Fig. 1 im Bereich des vorderen, mit einer Kammer der Luftleiteinrichtung verbundenen Endes, im Bereich einer mittleren Aufhängung des Luftkanals und im Bereich des hinteren Endes des Luftkanals jeweils in einer perspektivischen Schnittansicht,
- Fig. 4: den Kofferaufbau aus der Fig. 1 im Bereich des hinteren Endes des Luftkanals entlang einer vertikalen und sich senkrecht zur Längserstreckung des Kofferaufbaus erstreckenden Schnittebene und
- Fig. 5A-B: Details eines zweiten erfindungsgemäßen Kofferaufbaus im Bereich des Dachs und eines Luftkanals in einer perspektivischen Schnittansicht und in einem Längsschnitt.

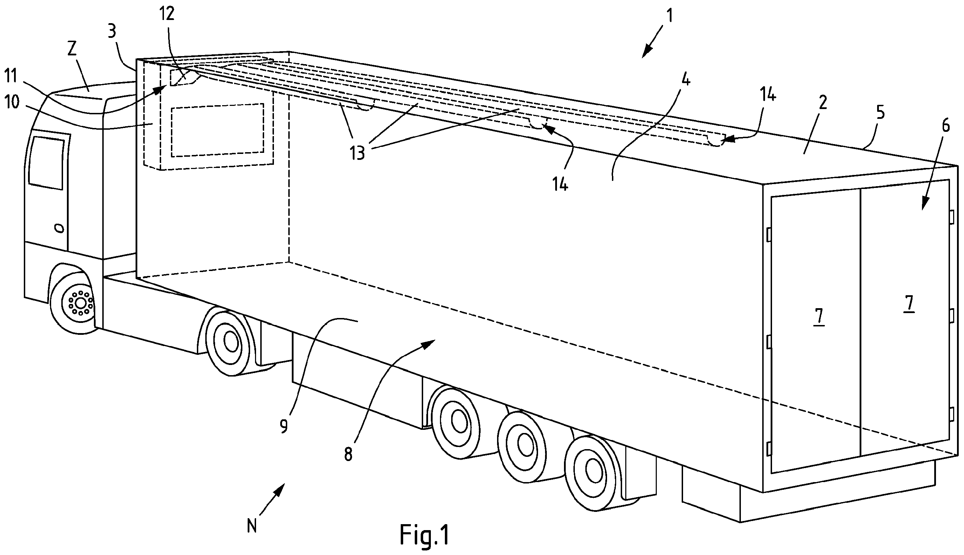

In der Fig. 1 ist ein Nutzfahrzeug N in Form eines Sattelaufliegers mit einem Kofferaufbau 1 in einer perspektivischen Ansicht dargestellt, das von einer Zugmaschine Z gezogen wird. Der Kofferaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Kofferaufbau 1 einen Laderaum 8, der nach unten durch einen Ladeboden 9 begrenzt wird, der dem Aufstellen von Ladung dient. Die Seitenwände 4,5, die Stirnwand 3, die Flügeltüren 7 und das Dach 2 werden wenigstens im Wesentlichen aus Paneelelementen gebildet. Zum Kühlen des Laderaums 8 ist an der Stirnwand 3 eine Transportkältemaschine 10 vorgesehen, die Luft aus dem Laderaum 8 ansaugt, kühlt und sodann über eine Luftleiteinrichtung 11 wieder in den Laderaum 8 hineinbläst. Die Luftleiteinrichtung 11 ist vorliegend dreiteilig ausgebildet, könnte jedoch beispielsweise auch einteilig ausgebildet sein. Die Luftleiteinrichtung 11 weist vorliegend zudem drei Kammern 12 auf, durch die die Kühlluft von der Transportkältemaschine 10 in drei Luftkanäle 13 unter dem Dach 2 des Kofferaufbaus 1 geleitet wird. Es könnte aber auch eine andere Zahl von Kammern 12 und/oder Luftkanälen 13 vorgesehen sein. Bei dem dargestellten und insoweit bevorzugten Kofferaufbau 1 wird die Kühlluft über die drei Luftkanäle 13 in der Längsrichtung des Kofferaufbaus 1 nach hinten geleitet. Für eine gleichmäßige Temperaturverteilung im Laderaum 8 sind die dargestellten und insoweit bevorzugten Luftkanäle 13 unterschiedlich lang ausgebildet und an ihrem jeweils hinteren Ende 14 offen, so dass dort Kühlluft in den Laderaum 8 ausströmen kann. Es könnten aber auch gleichlange Luftkanäle 13 verbaut sein oder solche, deren hinteres Ende 14 verschlossen ist. Auch kommt jede andere Anzahl an Luftkanälen 13 in Frage.

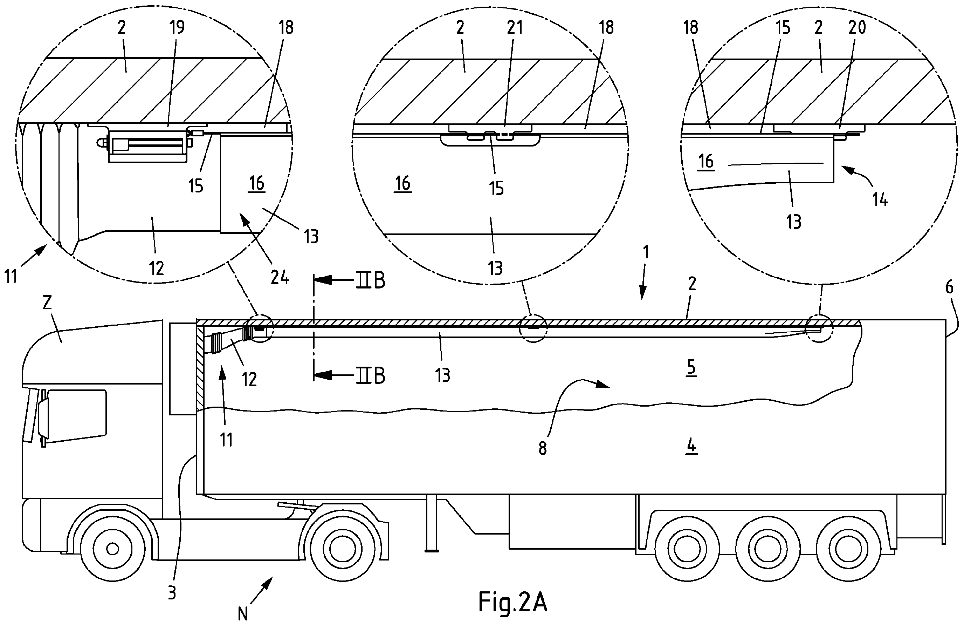

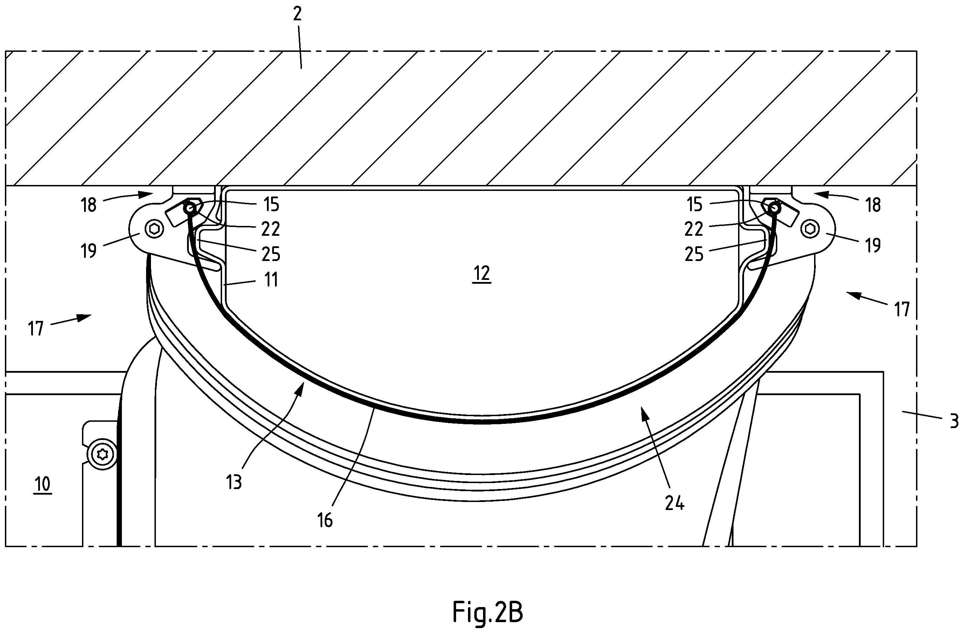

In den Fig. 2A-B ist der Kofferaufbau 1 im Bereich des Dachs 2 und eines Luftkanals 13 in seiner seitlichen Schnittansicht und einer Querschnittsansicht dargestellt, wobei der besseren Anschaulichkeit halber Details des Luftkanals 13 in der seitlichen Schnittansicht vergrößert hervorgehoben dargestellt sind. Der Luftkanal 13 ist im Querschnitt etwa U-förmig ausgebildet. An zwei sich seitlich entlang des Luftkanals 13 ersteckenden Abspannelementen 15 ist ein Hüllelement 16 in Form einer Plane aufgehängt. Zwischen den Abspannelementen 15 hängt das Hüllelement 16 lose nach unten durch, so dass sich der im Querschnitt U-förmige Querschnitt des Luftkanals 13 bildet. Der Luftkanal 13 ist nach unten durch das Hüllelement 16 und nach oben durch das Dach 2 abgeschlossen. Dabei weisen die seitlichen Abspannelemente 15 einen geringfügigen vertikalen Abstand zum Dach 2 auf. Da zudem das Hüllelement 16 sich nicht nennenswert bis über die Abspannelemente 15 nach oben hinaus erstreckt, verbleibt zu beiden Längsseiten 17 des Luftkanals 13 jeweils ein vertikaler Spalt 18 zwischen dem Hüllelement 16 und dem Dach 2. Durch diese Spalte 18 kann Kühlluft zu beiden Längsseiten 17 des Luftkanals 13 aus dem Luftkanal 13 austreten. Es wird also nicht nur nach hinten Kühlluft aus dem Luftkanal 13 ausgeblasen, sondern auch zur Seite. Bei dem dargestellten und insoweit bevorzugten Luftkanal 13 ist die Breite, mithin die Höhe, des Spalts 18 zwischen dem Hüllelement 16 und dem Dach 2 entlang des Luftkanals 13 wenigstens im Wesentlichen und wenigstens im Wesentlichen durchgängig konstant. So kann wenigstens im Wesentlichen entlang der gesamten Länge des Luftkanals 13 die Kühlluft zu beiden Längsseiten 17 austreten. Außerdem hängen die Abspannelemente 15 zu beiden Längsseiten 17 des Luftkanals 13 über ihre Längserstreckung nur sehr geringfügig nach unten durch, so dass die Kühlluft über die Längserstreckung des Luftkanals 13 relativ gleichmäßig zur Seite ausströmt. Der Abstand zwischen den Abspannelementen 15 und dem Dach 2 beträgt dabei jeweils zwischen 1 cm und 2 cm.

Die Abspannelemente 15 sind zum Zwecke einer lediglich geringen Dehnung jeweils aus einem Stahlseil gebildet. Dabei ist jedes der dargestellten Abspannelemente 15 zwischen einem vorderen Montageelement 19 und einem hinteren Montageelement 20 so abgespannt, dass das Abspannelement 15 geringfügig gedehnt, also gelängt, ist. Diese Dehnung sorgt für eine Rückstellkraft, welche das Abspannelement 15 stramm und ohne größeres Durchhängen zwischen dem vorderen Montageelement 19 und dem hinteren Montageelement 20 hält. Die Rückstellkraft ist dabei so groß, dass an dem Abspannelement 15 auch noch das Hüllelement 16 aufgehängt werden kann, ohne dass das Abspannelement 15 deutlich nach unten durchhängen würde. Der dargestellte und insoweit bevorzugte Luftkanal 13 ist recht lang, so dass zwischen dem jeweils vorderen Montageelement 19 und dem jeweils hinteren Montageelement 20 noch ein mittleres Montageelement 21 vorgesehen ist. Dieses mittlere Montageelement 21 dient dabei nicht dem Abspannen des Abspannelements 15. Das mittlere Montageelement 21 soll das Abspannelement 15 lediglich zwischen dem vorderen Montageelement 19 und dem hinteren Montageelement 20 am Dach 2 abstützen, und zwar in einem bestimmten vertikalen Abstand zum Dach 2. Außerdem ist das jeweilige Abspannelement 15 so am mittleren Montageelement 21 gehalten, dass das Abspannelement 15 und das mittlere Montageelement 21 nicht versehentlich außer Eingriff gelangen.

Die Abspannelemente 15 sind in seitlich an dem Luftkanal 13 vorgesehenen Taschen 22 aufgenommen, in denen die Abspannelemente 15 vorzugsweise in ihrer Längsrichtung frei beweglich angeordnet sind. So werden in der Längsrichtung nur geringfügige Kräfte von den Abspannelementen 15 auf das Hüllelement 16 und/oder umgekehrt übertragen. Auf das Hüllelement 16 in dieser Richtung einwirkende Kräfte führen daher nicht zu einer Beschädigung der Abspannelemente 15 und umgekehrt. Zudem ist es in diesem Zusammenhang besonders zweckmäßig, wenn die Querschnitte der Taschen 22 deutlich größer sind als die Querschnitte der zugehörigen Abspannelemente 15.

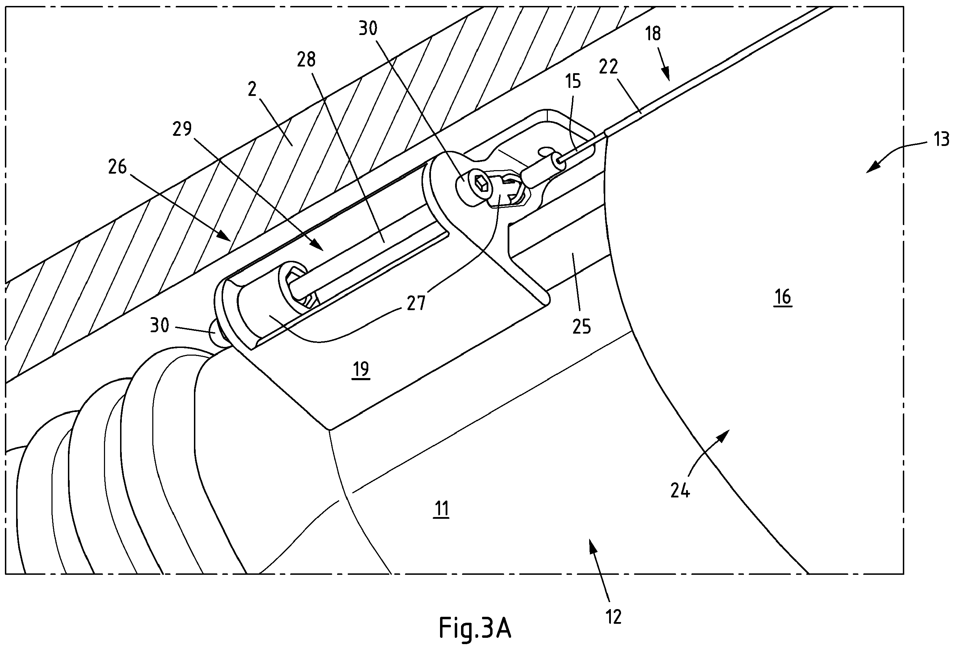

In der Fig. 3A ist das vordere Ende 24 des Luftkanals 13 dargestellt, das mehr oder weniger luftdicht mit einer Kammer 12 der Luftleiteinrichtung 11 verbunden ist. Bei dem dargestellten und insoweit bevorzugten Kofferaufbau 1 ist das hintere Ende der Kammer 12 bzw. der Luftleiteinrichtung 11 in das vordere Ende 24 des Luftkanals 13 eingesteckt. Eine andere Verbindung von Luftleiteinrichtung 11 und dem Luftkanal 13 ist aber denkbar. Bei dem dargestellten und insoweit bevorzugten Kofferaufbau 1 ist zudem eine Seite des hinteren Endes der Kammer 12 bzw. das hintere Endes der Luftleiteinrichtung 11 und das vordere Ende eines Abspannelements 15 mit dem gemeinsamen vorderen Montageelement 19 an dem Dach 2 festgelegt. Da das vordere Montageelement 19 vorne am Luftkanal 13 vorgesehen ist, wird dieses Montageelement 19 vorliegend als vorderes Montageelement 19 bezeichnet. An der gegenüberliegenden Längsseite 17 des vorderen Endes 24 des Luftkanals 13 ist ein gleichartiges vorderes Montageelement 19 zum Festlegen der anderen Längsseite 17 des Luftkanals 13 und des hinteren Endes der Kammer 13 bzw. der Luftleiteinrichtung 11 vorgesehen. Die beiden vorderen Montageelemente 19 umgreifen abschnittsweise jeweils eine äußere Rippe 25 der Luftleiteinrichtung 11. Auf diese Weise wird ein Formschluss zwischen der Luftleiteinrichtung 11 und den vorderen Montageelementen 19 in vertikaler Richtung und in horizontaler Richtung senkrecht zur Längserstreckung des Luftkanals 13 bzw. des Kofferaufbaus 1 bereitgestellt. In der Längserstreckung des Luftkanals 13 bzw. des Kofferaufbaus 1 ist die Luftleiteinrichtung 11 jedoch lediglich kraftschlüssig gehalten. Dadurch kann die Luftleiteinrichtung 11 in der Längsrichtung des Luftkanals 13 bzw. des Kofferaufbaus 1 gegenüber dem vorderen Montageelement 19 verschoben werden, und zwar entweder zum Toleranzausgleich oder wenn die Luftleiteinrichtung 11 von einem Fahrzeug oder Ladung in der entsprechenden Richtung angefahren wird. Die Luftleiteinrichtung 11 kann also im Bereich des vorderen Montageelements 19 in dieser Richtung nachgeben, um eine mögliche Beschädigung der Luftleiteinrichtung 11 zu vermeiden.

Das dargestellte und insoweit bevorzugte vordere Montageelement 19 weist eine Spanneinrichtung 26 auf, um das Abspannelement 15 abzuspannen und wieder zu entspannen. Hierzu ist das Abspannelement 15 mit einem Spannschlitten 27 verbunden, der entlang der Längserstreckung des Abspannelements 15 am vorderen Montageelement 19 verschiebbar gehalten ist. Je nachdem, in welche Richtung der Spannschlitten 27 entlang der Längserstreckung des Abspannelements 15 verschoben wird, wird das Abspannelement 15 gespannt oder entspannt. Das Verschieben des Spannschlittens 27 wird über eine Spannschraube 28 bewirkt, die mit dem Spannschlitten 27 kämmt und die abschnittsweise den Spannschlitten durchgreift. Dabei ist die Verschieberichtung des Spannschlittens abhängig 27 von der Drehrichtung der Spannschraube 28, die bei dem dargestellten und insoweit bevorzugten vorderen Montageelement 19 ortsfest vorgesehen ist, und zwar auch, wenn die Spannschraube 28 gedreht wird.

Über eine Aussparung 29 ist die Stellung des Spannschlittens 27, insbesondere des von der Spannschraube durchgriffenen Abschnitts des Spannschlittens 27, längs des vorderen Montageelements 19 für den Fahrer erkennbar, was die Handhabung der Spanneinrichtung 26 erleichtert. Ein Schraubenkopf 30 der Spannschraube 28 kann mit einem gebräuchlichen Werkzeug gedreht werden. Zudem kann das dargestellte vordere Montageelement 19 auch als hinteres Montageelement 20 eingesetzt werden. Dann können die vorderen Montageelemente 19 und die hinteren Montageelemente 20 einander entsprechend oder auch nur eines der Montageelemente 19,20 mit einer Spanneinrichtung 26 ausgestattet sein. Bevorzugt werden auf den einander gegenüberliegenden Längsseiten 17 des Luftkanals 13 jeweils gleichartige Montageelemente 19,20,21 vorgesehen.

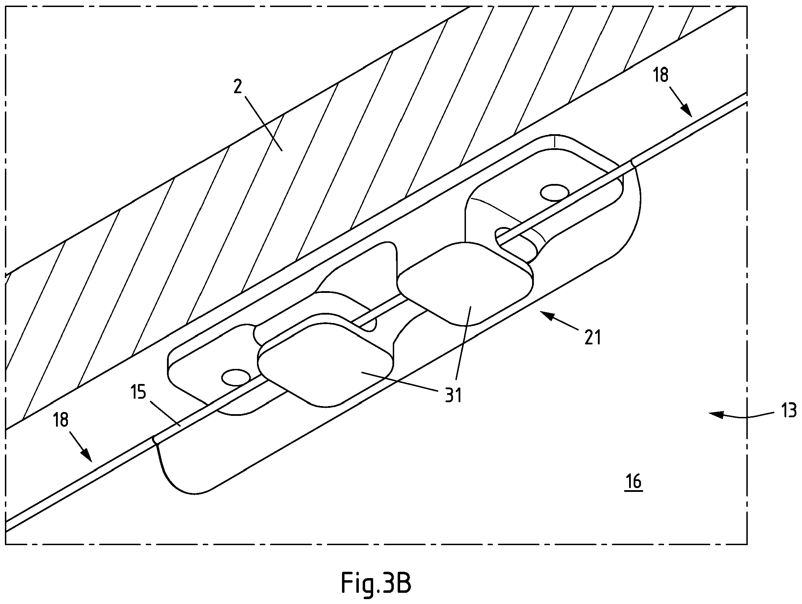

In der Fig. 3B ist ein mittlerer Bereich des Luftkanals 13 dargestellt, in dem das Abspannelement 15 und damit der Luftkanal 13 am Dach 2 des Kofferaufbaus 1 abgehängt und auf diese Weise gehalten ist. Dargestellt ist lediglich eine Längsseite 17 des Luftkanals 13. Die gegenüberliegende Längsseite 17 des Luftkanals 13 ist aber vorzugsweise gleichartig am Dach 2 abgestützt. Zur Abstützung dient dabei das mittlere Montageelement 21, das zwei Hakenelemente 31 umfasst, die zu gegenüberliegenden Seiten etwa senkrecht zur Längserstreckung des Abspannelements 15 und etwa senkrecht zur Vertikalen geöffnet sind. Die Abspannelemente 15 sind jeweils von gegenüberliegenden Seiten in die Hakenelemente 31 der mittleren Montageelemente 21 eingehängt. In der Längserstreckung der Abspannelemente 15 sind die Abspannelemente 15 in den mittleren Montageelementen 21 frei beweglich gehalten. Die mittleren Montageelemente 21 sind am Dach 2 festgelegt.

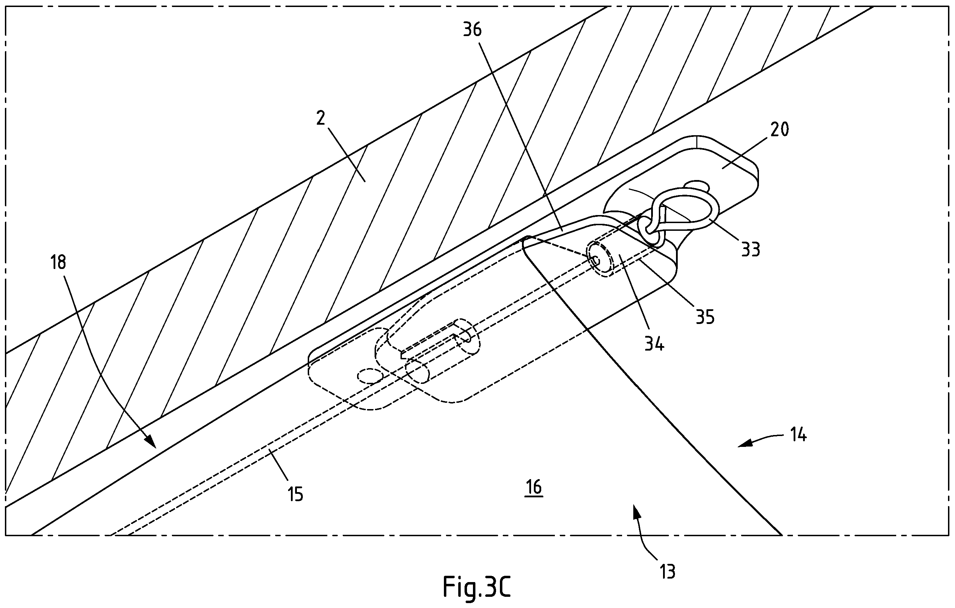

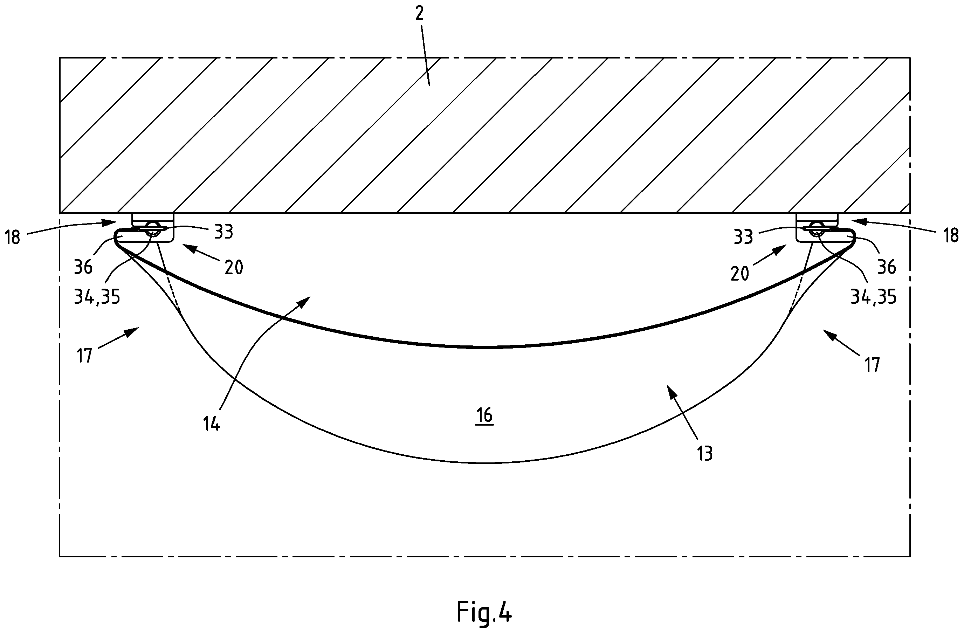

In der Fig. 3C ist ein hinterer Bereich des Luftkanals 13 in einer perspektivischen Ansicht dargestellt, in dem sich der Strömungsquerschnitt des Luftkanals 13 verjüngt. In der Fig. 4 ist das hintere Ende 14 des Luftkanals 13 in einer Ansicht von hinten dargestellt. Das hintere Ende 14 des Luftkanals 13 ist zu beiden gegenüberliegenden Längsseiten 17 über jeweils ein hinteres Montageelement 20 am Dach 2 festgelegt. Jedes der hinteren Montageelemente 20 hält dabei das zugeordnete Abspannelement 15, das dann wiederum das Hüllelement 16 hält. Die Abspannelemente 15 sind in den hinteren Montageelementen 20 formschlüssig gehalten und zwar wenigstens in Richtung des jeweils vorderen Montageelements 19. So können die Abspannelemente 15 jeweils zwischen dem vorderen Montageelement 19 und dem hinteren Montageelement 20 zuverlässig abgespannt werden. Zudem ist aber das hintere Montageelement 20 so ausgebildet, dass das entsprechende Abspannelement 15 auch in vertikaler Richtung und in horizontaler Richtung formschlüssig gehalten ist. An dem hinteren Ende des Abspannelements 15 ist eine Öse 33 vorgesehen. Diese Öse 33 erleichtert das Einhängen des Abspannelements 15 in das hintere Montageelement 20, bevor das Abspannelement 15 über die Spanneinrichtung 26 abgespannt wird. Damit auf einfache und zugleich zuverlässige Weise ein Formschluss zwischen dem Abspannelement 15 und dem hinteren Montageelement 20 beim Einhängen des Abspannelements 15 in das hintere Montageelement 20 bereitgestellt werden kann, ist an dem hinteren Ende des Abspannelements 15 eine Hülse 34 auf dem Stahlseil des Abspannelements 15 angebracht, die in einer korrespondierenden Aufnahme 35 des hinteren Montageelements 20 aufgenommen wird.

Die hinteren Montageelemente 20 weisen ferner jeweils einen Abstandshalter 36 auf, um den das Hüllelement 16 jeweils außen herumgeführt ist. Im Beriech der Abspannelemente 15 ist der Luftkanal 13 mithin schmaler als im Bereich der Abstandshalter 36. Das für das Herumführen des Hüllelements 16 um die Abstandshalter 36 benötigte Material wird von dem unterhalb der Abstandshalter 36 vorgesehenen Abschnitt des hinteren Endes 14 des Luftkanals 13 bereitgestellt. Dies hat zur Folge, dass das untere Ende des Hüllelements 16 im Beriech der Abstandshalter 36 näher am Dach 2 gehalten wird als das untere Ende des Hüllelements 16 in einem weiter vorne vorgesehenen Bereich. So wird nicht nur der Strömungsquerschnitt senkrecht zur Längserstreckung des Luftkanals 13 verkleinert, sondern auch der untere Rand des Hüllelements 16 angehoben. Es ist mithin unwahrscheinlicher, dass versehentlich mit einem Fahrzeug oder mit einer Ladung gegen das hintere Ende 14 des Luftkanals 13 gefahren wird, was zu einer nachhaltigen Beschädigung des Luftkanals 13 führen könnte.

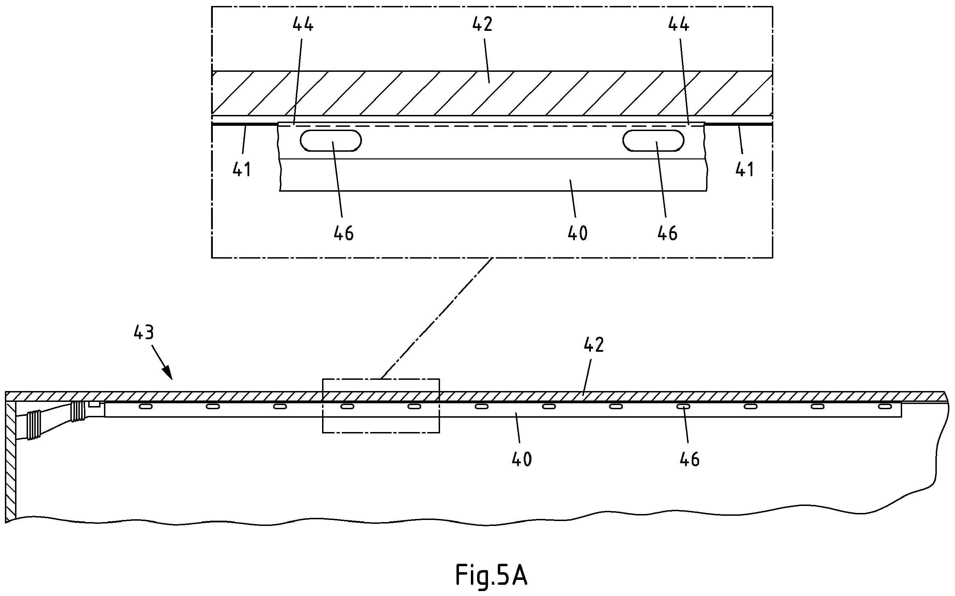

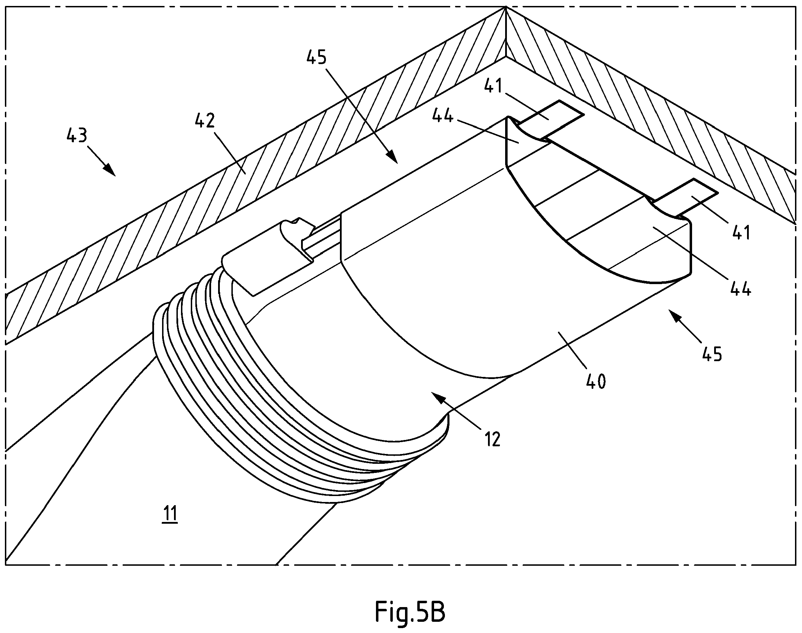

In den Fig. 5A-B ist ein alternativer Luftkanal 40 in einer perspektivischen Schnittansicht und in einer Seitenansicht dargestellt. Der dargestellte und insoweit bevorzugte Luftkanal 40 ist über Abspannelemente 41 in Form von flachen Bändern gehalten, die über nicht im Einzelnen dargestellte Montageelemente, die denen des zuvor beschriebenen Ausführungsbeispiels ähneln, unterhalb des Dachs 42 des Kofferaufbaus 43 abgespannt sind. Die Abspannelemente 41 erstrecken sich abschnittsweise durch seitliche und in Längsrichtung des Luftkanals 40 verlaufende Taschen 44. Die Abspannelemente 41 sind etwa 1 cm bis 2 cm unterhalb des Dachs 42 abgespannt. Der Luftkanal 40 ist jedoch nach oben in Richtung des Dachs 42 durch entsprechende Abschnitte des Hüllelements 16 geschlossen. Dennoch sind an beiden Längsseiten 45 noch Öffnungen 46 vorgesehen, die entlang der Längsrichtung des Luftkanals 40 verteilt angeordnet sind. Über diese Öffnungen 46 kann seitlich Kühlluft ausströmen, und zwar ähnlich zu dem Spalt 18 zwischen dem Dach 2 und dem Hüllelement 16 bei dem zuvor beschriebenen Ausführungsbeispiel.

### Bezugszeichenliste

- 1: Kofferaufbau
- 2: Dach
- 3: Stirnwand
- 4,5: Seitenwand
- 6: Rückwand
- 7: Flügeltür
- 8: Laderaum
- 9: Ladeboden
- 10: Transportkältemaschine
- 11: Luftleiteinrichtung
- 12: Kammer
- 13: Luftkanal
- 14: hinteres Ende
- 15: Abspannelement
- 16: Hüllelement
- 17: Längsseite
- 18: Spalt
- 19: vorderes Montageelement
- 20: hinteres Montageelement
- 21: mittleres Montageelement
- 22: Tasche
- 24: vorderes Ende
- 25: Rippe
- 26: Spanneinrichtung
- 27: Spannschlitten
- 28: Spannschraube
- 29: Aussparung
- 30: Schraubenkopf
- 31: Hakenelement
- 33: Öse
- 34: Hülse
- 35: Aufnahme
- 36: Abstandshalter
- 40: Luftkanal
- 41: Abspannelemente
- 42: Dach
- 43: Kofferaufbau
- 44: Tasche
- 45: Längsseite
- 46: Öffnung
- N: Nutzfahrzeug
- Z: Zugmaschine

## Patentansprüche

1. Kofferaufbau (1,43) eines Nutzfahrzeugs (N), insbesondere eines Lastkraftwagens, Anhängers oder Sattelaufliegers, mit einer Transportkältemaschine (10) zum Erzeugen von Kühlluft, mit einem Dach (2,42) und mit wenigstens einem am Dach (2,42) gehaltenen Luftkanal (13,40) zum Leiten der Kühlluft wenigstens teilweise entlang der Längserstreckung des Kofferaufbaus (1,43), wobei der wenigstens eine Luftkanal (13,40) wenigstens ein Hüllelement (16) zum wenigstens überwiegenden Begrenzen des Luftkanals (13,40) in vom Dach (2,42) abgewandten Richtungen, wenigstens zwei in Längsrichtung voneinander beabstandete Montageelemente (19,20,21) zum wenigstens teilweisen Montieren des wenigstens einen Luftkanals (13,40) am Dach (2,42) und wenigstens ein Abspannelement (15,41) zum Halten des Hüllelements (16) an den wenigstens zwei Montageelementen (19,20,21) umfasst,
**dadurch gekennzeichnet, dass**
das wenigstens eine Abspannelement (15,41) in Längsrichtung des Abspannelements (15,41) zwischen den wenigstens zwei Montageelementen (19,20,21) abgespannt gehalten ist und dass das wenigstens eine Hüllelement (16) zwischen den wenigstens zwei Montageelementen (19,20,21) von dem wenigstens einen Abspannelement (15,41) entgegen der Schwerkraft gehalten ist.

2. Kofferaufbau nach Anspruch 1,
**dadurch gekennzeichnet, dass**
einander gegenüberliegenden Längsseiten (17,45) des Luftkanals (13,40) zugeordnet jeweils wenigstens ein Abspannelement (15,41) in Längsrichtung des Abspannelements (15,41) zwischen jeweils wenigstens zwei Montageelementen (19,20,21) abgespannt gehalten ist und dass das wenigstens eine Hüllelement (16) einander gegenüberliegenden Längsseiten (17,45) des Luftkanals (13,40) zugeordnet jeweils zwischen den wenigstens zwei Montageelementen (19,20,21) von jeweils einem Abspannelement (15,41) entgegen der Schwerkraft gehalten ist.

3. Kofferaufbau nach Anspruch 1 oder 2,
**dadurch gekennzeichnet, dass**
sich das wenigstens eine Abspannelement (15,41) zwischen den wenigstens zwei Montageelementen (19,20,21) wenigstens im Wesentlichen durchgängig vom Dach (2,42) beabstandet erstreckt und dass, vorzugsweise, der Abstand des wenigstens einen Abspannelements (15,41) zwischen den wenigstens zwei Montageelementen (19,20,21) vom Dach (2,42) wenigstens im Wesentlichen durchgängig wenigstens 0,5 cm, vorzugsweise wenigstens 1 cm, insbesondere wenigstens 2 cm, beträgt und/oder wenigstens im Wesentlichen durchgängig höchstens 2,5 cm, vorzugsweise höchstens 3 cm, insbesondere höchstens 4 cm, beträgt.

4. Kofferaufbau nach einem der Ansprüche 1 bis 3,
**dadurch gekennzeichnet, dass**
das wenigstens eine Abspannelement (15,41) ein Seil, insbesondere Stahlseil und/oder ein, insbesondere Drähte oder Drahtseile aufweisendes Band und/oder Gurt ist und dass, vorzugsweise, das Band und/oder der Gurt geflochten und/oder gewebt ist.

5. Kofferaufbau nach einem der Ansprüche 1 bis 4,
**dadurch gekennzeichnet, dass**
eine Spanneinrichtung (26) zum Spannen und/oder Entspannen des wenigstens einen Abspannelements (15,41) zwischen den wenigstens zwei Montageelementen (19,20,21) vorgesehen, insbesondere wenigstens einem Montageelement (19,20,21) zugeordnet, ist und dass, vorzugsweise, die wenigstens eine Spanneinrichtung (26) eine insbesondere ortsfeste, Spannschraube (28) und einen mit der Spannschraube (28) kämmenden, in Längsrichtung des Abspannelements (15,41) verschiebbar an der Spanneinrichtung (26) gehaltenen und das wenigstens eine Abspannelement (15,41) mit der Spanneinrichtung (26) verbindenden Spannschlitten (27) aufweist und dass, weiter vorzugsweise, die Längsachse der Spannschraube (28) und die Längserstreckung des Abspannelements (15,41) wenigstens im Wesentlichen parallel zueinander ausgerichtet sind.

6. Kofferaufbau nach einem der Ansprüche 1 bis 5,
**dadurch gekennzeichnet, dass**
das Hüllelement (16) wenigstens im Wesentlichen aus einem Tuch und/oder einer Plane gebildet ist und/oder dass das Hüllelement (16) wenigstens im Wesentlichen aus einem Gewebe und/oder aus Kunststoff gebildet ist.

7. Kofferaufbau nach einem der Ansprüche 1 bis 6,
**dadurch gekennzeichnet, dass**
das wenigstens eine Abspannelement (15,41) wenigstens abschnittsweise in einer sich wenigstens im Wesentlichen längs zum Luftkanal (13,40) erstreckenden, an gegenüberliegenden Längsenden offenen Tasche (22,44) aufgenommen ist.

8. Kofferaufbau nach einem der Ansprüche 1 bis 7,
**dadurch gekennzeichnet, dass**
der Luftkanal (13) in Richtung des Dachs (2) offen ist und/oder dass der Luftkanal (13) zusammen mit dem Dach (2) wenigstens einen sich wenigstens abschnittsweise in Längsrichtung des Luftkanals (13) erstreckenden Spalt (18) zum seitlichen Ausströmen von Kühlluft bildet.

9. Kofferaufbau nach einem der Ansprüche 1 bis 8,
**dadurch gekennzeichnet, dass**
der Luftkanal (40) in Richtung des Dachs (42) wenigstens im Wesentlichen geschlossen ist und/oder dass entlang der Längserstreckung des Luftkanals (40) seitliche Öffnungen (46) zum seitlichen Ausströmen von Kühlluft vorgesehen sind.

10. Kofferaufbau nach einem der Ansprüche 1 bis 9,
**dadurch gekennzeichnet, dass**
der freie Strömungsquerschnitt des Luftkanals (13,40) dem hinteren freien Ende (14) des Luftkanals (13,40) zugeordnet, insbesondere senkrecht zur Längserstreckung, sich verjüngend ausgebildet ist und/oder dass das untere Ende des Luftkanals (13,40) im Bereich des hinteren Endes (14) des Luftkanals (13,40) höher angeordnet ist als in einem vom hinteren Ende (14) des Luftkanals (13,40) beabstandeten Bereich.

11. Kofferaufbau nach einem der Ansprüche 1 bis 10,
**dadurch gekennzeichnet, dass**
das Hüllelement (16) im Bereich des hinteren Endes (14) des Luftkanals (13,40) in wenigstens einem seitlichen Randbereich so um einen Abstandshalter (36) herumgeführt ist, dass die Breite des Luftkanals (13,40) oberhalb des Abstandshalters (36) schmaler ist als wenigstens abschnittsweise im Bereich des wenigstens einen Abstandshalters (36) und/oder das untere Ende des Luftkanals (13,40) im Bereich des Abstandshalters (36) wenigstens abschnittsweise höher angeordnet ist als in einem vom wenigstens einen Abstandshalter (36) beabstandeten Bereich.

12. Kofferaufbau nach Anspruch 11,
**dadurch gekennzeichnet, dass**
der wenigstens eine Abstandshalter (36) in das dem hinteren Ende des Luftkanals (13,40) zugeordnete wenigstens eine Montageelement (20) integriert ist und dass, vorzugsweise, das wenigstens eine Montageelement (20) im Bereich des Abstandshalters (36), insbesondere in einer Ebene mit dem Abstandshalter (36) senkrecht zur Längserstreckung des Luftkanals (13,40), einen Halter für das Abspannelement (15,41) aufweist.

13. Kofferaufbau nach einem der Ansprüche 1 bis 12,
**dadurch gekennzeichnet, dass**
das Abspannelement (15,41) an wenigstens einem hinteren Montageelement (20) wenigstens in der Längsrichtung des Abspannelements (15,41), in der Längsrichtung des Luftkanals (13,40), in der Schwerkraftrichtung und/oder zu wenigstens einer Längsseite (17,45) des Luftkanals (13,40) formschlüssig gehalten ist und/oder dass das Abspannelement (15,41) an wenigstens einem mittleren Montageelement (21) in der Schwerkraftrichtung und/oder zu wenigstens einer Längsseite (17,45) des Luftkanals (13,40) formschlüssig gehalten ist und/oder dass das Abspannelement (15,41) an wenigstens einem vorderen Montageelement (19) wenigstens in der Längsrichtung des Abspannelements (15,41), in der Längsrichtung des Luftkanals (13,40), in der Schwerkraftrichtung und/oder zu wenigstens einer Längsseite (17,45) des Luftkanals (13,40) formschlüssig gehalten ist.

14. Kofferaufbau nach einem der Ansprüche 1 bis 13,
**dadurch gekennzeichnet, dass**
das wenigstens eine Montageelement (19,20,21) aus Kunststoff gebildet ist und/oder dass das wenigstens eine Montageelement (19,20,21) am Dach (2,42) verschraubt und/oder vernietet ist und/oder dass wenigstens ein mittleres Montageelement (19,20,21) in der Längsrichtung des Abspannelements (15,41) voneinander beabstandete, zu entgegengesetzten Längsseiten (17,45) des Luftkanals (13,40) hin geöffnete Hakenelemente (31) aufweist.

15. Kofferaufbau nach einem der Ansprüche 1 bis 14,
**dadurch gekennzeichnet, dass**
der Luftkanal (13,40) mit seinem vorderen Ende (24) mit einer Luftleiteinrichtung (11) zum Leiten von Kühlluft von der Transportkältemaschine (10) zum wenigstens einen Luftkanal (13,40) verbunden ist und dass das vordere Montageelement (19) das vordere Ende (24) des Luftkanals (13,40) und das hintere Endes der Luftleiteinrichtung (11) am Dach (2,42) des Kofferaufbaus (1,43) hält, insbesondere dass das vordere Ende (24) des Luftkanals (13,40) und das hintere Ende der Luftleiteinrichtung über das Montageelement (19) am Dach (2,42) des Kofferaufbaus (1,43) montiert sind.
